# EUROPEAN PATENT APPLICATION

(11) **EP 2 809 047 A2**
(43) Date of publication of application: **03.12.2014**
(21) Application number: 14170480.9
(22) Date of filing: 29.05.2014
(51) Int. Cl.: H04L 29/06, H04W 12/06

(54) **Communication apparatus, method of controlling, computer program and storage medium**

(30) Priority: 30.05.2013 JP 2013114487
(71) Applicant: CANON KABUSHIKI KAISHA, Ohta-ku Tokyo 146-8501 (JP)
(72) Inventor: Nakajima, Takafumi, Ohta-ku, Tokyo (JP)
(74) Representative: Northway, Daniel Robert

(57) **Abstract**

A communication apparatus (101) that selects one out of a plurality of authentication modes for connecting to a network for which an authentication is required, identifies (208, 210) network information relating to a connection target network, and authentication information for executing an authentication, selects (207) an authentication mode to be used from the plurality of authentication modes based on the network information and one or more attributes for when connecting to the connection target network based on the authentication information, and executes (209) an authentication for connecting to the connection target network using the selected authentication mode.

## Description

### BACKGROUND OF THE INVENTION

### Field of the Invention

The present invention relates to an authentication technique in communications.

### Description of the Related Art

In recent years, public wireless LAN services for providing connection services to the Internet by installing a wireless LAN access point in places having a public nature such as fast-food restaurants, stations, and airports, are increasing. There are public wireless LAN services that can be used for a charge, and those that can be used for free, and the provision configuration varies depending on the public wireless LAN operator. For example, in a charged public wireless LAN, there are many cases in which, in order to determine whether or not a user is a legitimate user, a login is performed using account information such as a user ID and a password, and only users having legitimate authentication information are permitted to use the Internet.

It is common in the login processing on the user terminal to use a WEB browser. On the other hand, as an authentication mode for performing authentication automatically without using a WEB browser, there is the WISPr (Wireless Internet Service Provider roaming) standard. By employing WISPr, login processing of the public wireless LAN becomes possible even on terminals that do not have a browser. Note, hereinafter login processing using WISPr will be referred to as "WISPr-based login". In a WISPr-based login, there is the feature that the authentication processing can be used commonly if the standard is conformed to because the authentication procedure is standardized in a protocol. However, there are cases in which the WISPr standard is extended independently and used, and in such cases there are cases where the authentication processing cannot be used commonly.

Meanwhile, not all public wireless LAN operators support WISPr. In response to this, in Japanese Patent Laid-Open No. 2009-538059, a technique is recited in which, in cases where WISPr is not supported, a login processing procedure that a WEB browser transmits or receives is recorded in a script in a terminal that does not have a WEB browser, and login processing is performed by a software program. Data that are transmitted or received are HTTP (Hyper Text Transfer Protocol) / HTTPS (HTTP over Secure Socket Layer) data. In the technique recited in Japanese Patent Laid-Open No. 2009-538059, in cases where HTTP/HTTPS transmission processing is performed based on information of received HTML (Hyper Text Markup Language), login processing equivalent to cases where a WEB browser is used is executed. Note, hereinafter, login processing based on HTML will be referred to as "HTML-based login".

Also, in a free public wireless LAN, there are cases in which an advertisement, usage conditions, or the like is displayed as a WEB page on the WEB browser upon connection and Internet usage is permitted with a button click on the WEB page. In such a case, because WISPr does not support these kinds of login configurations, on terminals that do not have a WEB browser, it becomes possible to connect to the Internet by executing an HTML-based login.

Note, in Japanese Patent Laid-Open No. 2009-538059, a technique is recited for associating an SSID (Service Set IDentifier) of the public wireless LAN and a login sequence, and selecting a login sequence in correspondence with the SSID.

However, in a public wireless LAN that supports WISPr, depending on the account used, there are cases where authentication by WISPr-based login fails but authentication by HTML-based login succeeds. Furthermore, there are operators that provide both charged and free public wireless LAN services in a single public wireless LAN area (a single SSID). Because a WISPr-based login requires a user ID and a password, charged public wireless LAN services may be provided supporting WISPr, and free public wireless LAN service may be provided not supporting WISPr, for example. In such a case, when SSIDs and login sequences are associated one-to-one as in the technique recited in Japanese Patent Laid-Open No. 2009-538059, authentication processing is executed by either of the modes, and only one side of the services can be used.

Also, in cases where a free service is used, an HTML-based login is executed. In the HTML-based login, a login sequence is executed using information of the HTML of a WEB page, and a script of the login sequence. In logging off as well, similarly, a logoff sequence is executed. Note, hereinafter, both login sequences and logoff sequences will be referred to as connection sequences. Here, there is a possibility that a WEB page will be updated by a public wireless LAN operator, and in cases where the WEB page is updated, there are cases in which an inconsistency arises in the HTML information, and one cannot login. On the other hand, in charged services, for which a WISPr-based login is performed, because connection sequences in the WISPr-based login/logoff conform to the WISPr standard, connectability is guaranteed more compared to HTML-based login even if a WEB page is updated. However, in cases where a charged service is used, a new charge will occur depending on the user account that is used.

In this way, there existed the problem that because connection processing that considers such things as the account to be used, the provision configuration of the public wireless LAN, and the like could not be executed, the connectability, including authentication, is deteriorated in the usage of public wireless LANs.

The present invention was conceived in view of the above described problem, and, in some embodiments, provides a technique for executing authentication by selecting an appropriate mode automatically upon connection to a network.

### SUMMARY OF THE INVENTION

The present invention in its first aspect provides a communication apparatus as specified in claims 1-11.

The present invention in its second aspect provides a method for controlling a communication apparatus as specified in claim 12.

The present invention in its third aspect provides a computer program as specified in claim 13.

The present invention in its fourth aspect provides a storage medium as specified in claim 14.

Further features of the present invention will become apparent from the following description of exemplary embodiments (with reference to the attached drawings).

### BRIEF DESCRIPTION OF THE DRAWINGS

The accompanying drawings, which are incorporated in and constitute a part of the specification, illustrate embodiments of the invention, and together with the description, serve to explain the principles of the invention.
Figure 1 is a view for showing a network configuration example.
Figure 2 is a block diagram for showing an example configuration of a camera.
Figure 3 is a view for showing an example of a list of connection target networks.
Figure 4 is a sequence diagram for showing a processing example executed upon connection to a network.
Figure 5 is a flowchart for showing an example of connection processing, for connection to a network, that the camera executes.
Figure 6 is a flowchart for showing an example of authentication mode selection processing, that the camera executes.

### DESCRIPTION OF THE EMBODIMENTS

An exemplary embodiment(s) of the present invention will now be described in detail with reference to the drawings. It should be noted that the relative arrangement of the components, the numerical expressions and numerical values set forth in these embodiments do not limit the scope of the present invention unless it is specifically stated otherwise.

### (Network Configuration)

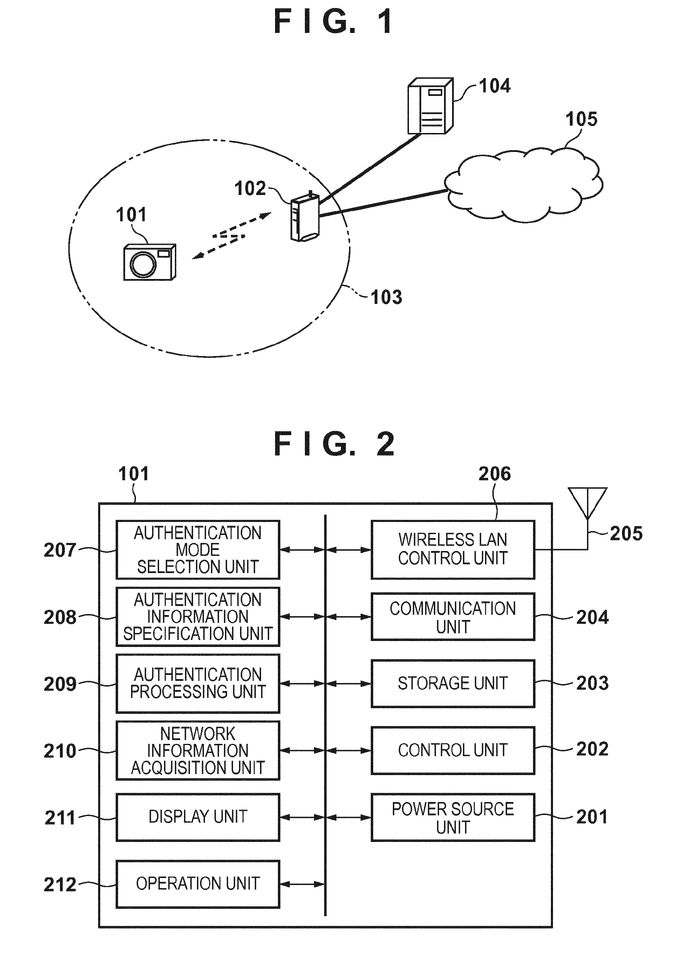

Figure 1 illustrates a network configuration example according to embodiments. The network includes, for example, a camera 101, which is a communication apparatus, a (public) wireless LAN access point (AP) 102, an authentication server 104, and the Internet 105. Note, in Figure 1, the AP 102 constructs a wireless communication network 103 by wireless LAN.

The camera 101 has a communication function by wireless LAN, and is able to perform data communication by connecting to the AP 102 through a wireless line in the wireless communication network 103. The AP 102 is connected by wire, for example, to the authentication server 104, and when the terminal (the camera 101) that connected to the AP 102 connects to the Internet 105, the AP 102 and the authentication server 104 collaborate, and access control of the terminal is performed with authentication processing. The authentication server 104 manages authentication information with a database for each user or device, and executes authentication processing using information managed in the database. For the terminal (the camera 101), a connection to the Internet 105 through the AP 102 becomes possible when the authentication in the authentication server 104 succeeds, and access restrictions in the AP 102 are cancelled. Note, in this embodiment, explanation will be given for cases in which WEB-based authentication processing using HTTP/HTTPS for the authentication processing is used. However, regarding the mode of the authentication processing, limitation is not made to this.

### (Configuration of the Camera 101)

Figure 2 is a block diagram for showing an example configuration of the camera 101 (communication apparatus) according to the embodiment. The camera 101 has, for example, a power source unit 201, a control unit 202, a storage unit 203, a communication unit 204, a wireless LAN control unit 206, an authentication mode selection unit 207, an authentication information specification unit 208, an authentication processing unit 209, a network information acquisition unit 210, a display unit 211, and an operation unit 212. Note, the wireless LAN control unit 206 is connected to an antenna 205.

The power source unit 201 supplies power to the camera 101. The control unit 202 controls the camera 101 on the whole by executing control programs stored in the storage unit 203. The storage unit 203 stores the control programs that the control unit 202 executes, parameters necessary for communication, and various information pertaining to public wireless LANs, for example. The various later explained operations are performed by the control unit 202 executing a control program stored on the storage unit 203.

The communication unit 204 executes communication protocol processing by transmitting or receiving packets according to various communication protocols. The wireless LAN control unit 206, for example, performs wireless LAN RF control, wireless LAN communication processing, various control of wireless LAN communication compliant with the IEEE 802.11 series, and protocol processing related the wireless LAN communication. Note, the wireless LAN control unit 206 is able to transmit or receive signals with the AP 102 via the antenna 205.

An authentication mode selection unit 207 selects an authentication mode used in authentication upon connection to a network from out of a plurality of authentication modes. In this embodiment, the authentication mode selection unit 207 selects the authentication mode to be executed from WISPr-based login processing and HTML-based login processing. Note, in this embodiment, explanation will be given for cases where the authentication mode to be used is selected from out of two authentication modes, but configuration may be taken such that two or more authentication modes are supported. Also, there is no limitation to a WISPr-based authentication mode and an HTML-based authentication mode, and other authentication modes may be used. Note, the authentication mode selection unit 207 selects the authentication mode to be executed upon connection to a connection target network based on a connection target list stored in the storage unit 203, and authentication information that an authentication information specification unit 208 specifies, for example.

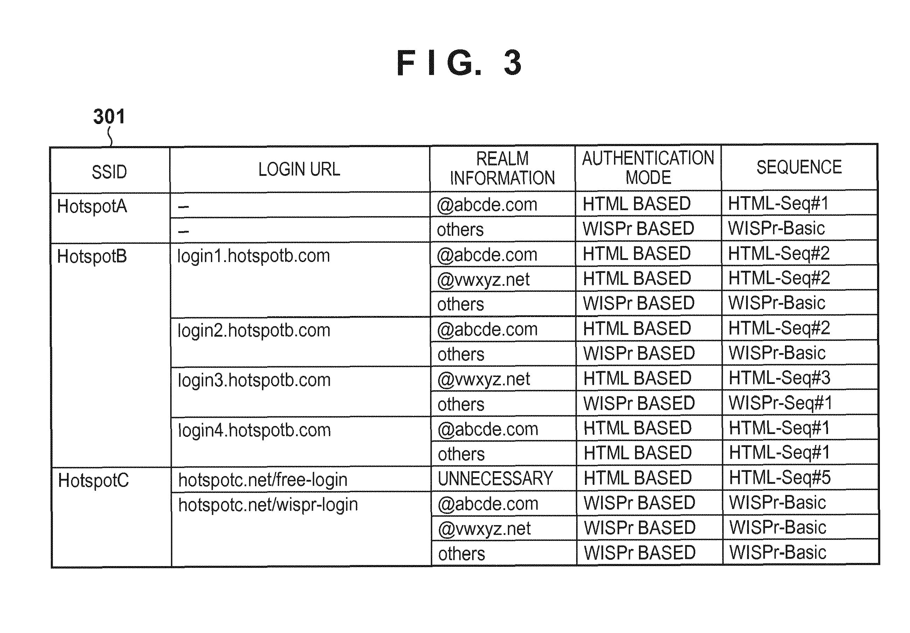

Figure 3 shows an example of a connection target list 301, for registering public wireless LAN connection targets, which is stored in the storage unit 203. In the connection target list 301 of Figure 3, character string information is included in which SSIDs, which are identification information of public wireless LANs, and login URLs (Uniform Resource Locator) used when performing login processing are included as network information. Note, a login URL used upon login processing is information for indicating a position in a network of an apparatus (a server) that executes authentication. Also, realm information of a user ID is included as authentication information attribute information.

In the example of Figure 3, to a single network information item (a combination of an SSID and a login URL), one or a plurality of attribute information items are associated. Also, for a combination of network information and attribute information, an authentication mode and a sequence identification number of a connection sequence recited in the script are registered respectively. The authentication mode selection unit 207 selects the authentication mode to be used from network information pertaining to the connection target network (the SSID and the login URL), and information (realm information) of attributes specified based on authentication information.

The authentication information specification unit 208 specifies authentication information used for authentication upon connection to a connection target network. In the authenticating in the public wireless LAN, generally a user ID and a password (an account) are used as authentication information, and the authentication is executed, but the authentication information specification unit 208, can also for example, specify information of a distribution source, as authentication information, from information of the user ID. Because of this, for example, it becomes possible to easily select authentication modes that differ for each attribute for a network that performs simple authentication for users of a group to which authentication information is distributed from a distribution source, and also performs different authentication for other users. Note, the information of the distribution source, for example, may be information of an ISP (Internet Service Provider) and information of a public wireless LAN provision operator. Hereinafter, explanation will be given for cases in which information of an ISP is specified as the information of the distribution source. The information of an ISP is specified based on realm information included in the user ID. However, if the information is such that information of an ISP is identifiable from information of a user ID, information other than realm information may be used for specifying information of an ISP. For example, in cases where a number of a mobile telephone is used for a user ID, configuration may be taken such that the number of the mobile telephone and the mobile telephone operator are stored in association, and the mobile telephone operator is determined to be an ISP.

The network information acquisition unit 210 acquires network information relating to a connection target wireless LAN network. The network information acquisition unit 210 acquires identification information for identifying the wireless LAN network from the SSID and the login URL, or the like, for example.

The authentication mode selection unit 207 determines whether the information of the distribution source of the authentication information specified in the authentication information specification unit 208 matches information of a particular distribution source specified by the realm information for the identification information that the network information acquisition unit 210 acquired. Then, the authentication mode selection unit 207 selects an authentication mode to be used by specifying an attribute, for when the camera 101 connects to the connection target network, with this determination.

The authentication processing unit 209 executes authentication for a connection to the Internet 105 using the authentication mode that the authentication mode selection unit 207 selected. The display unit 211 presents various information to the user by a screen display, as visibly recognizable information, such as an LCD, an LED, or the like. The operation unit 212 is a functional unit for operating the camera 101, that acquires an instruction from the user by accepting an operation of an operation button by the user.

Note, all of the above described functional blocks have mutual relationships in software or in hardware. Also, the above described functional blocks are one example, and a plurality of functional blocks may be comprised in a single functional block, and any of the functional blocks may be divided further into a plurality of functional blocks.

### (Connection Processing)

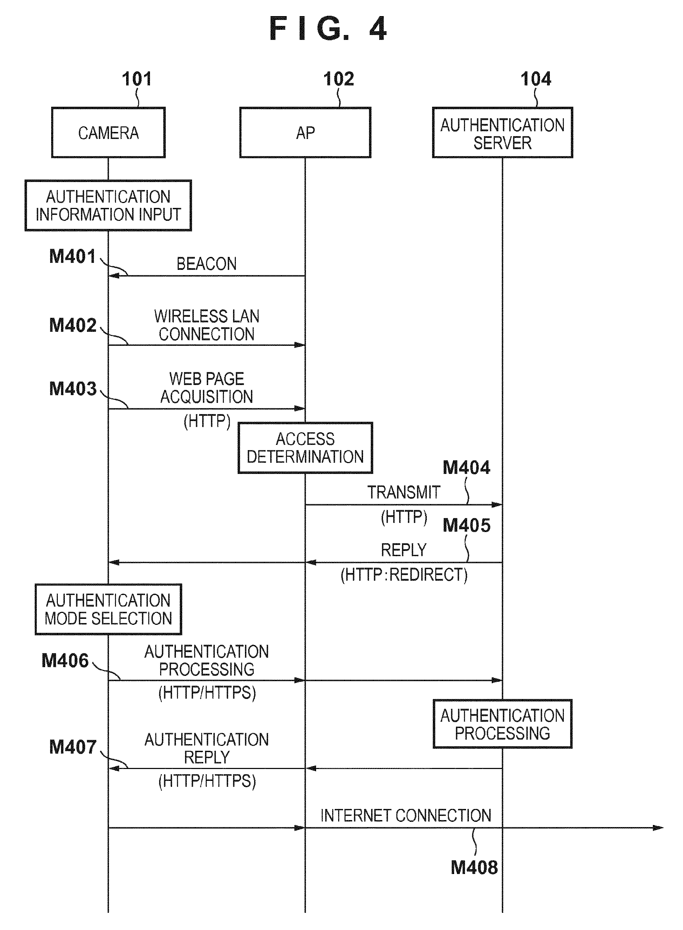

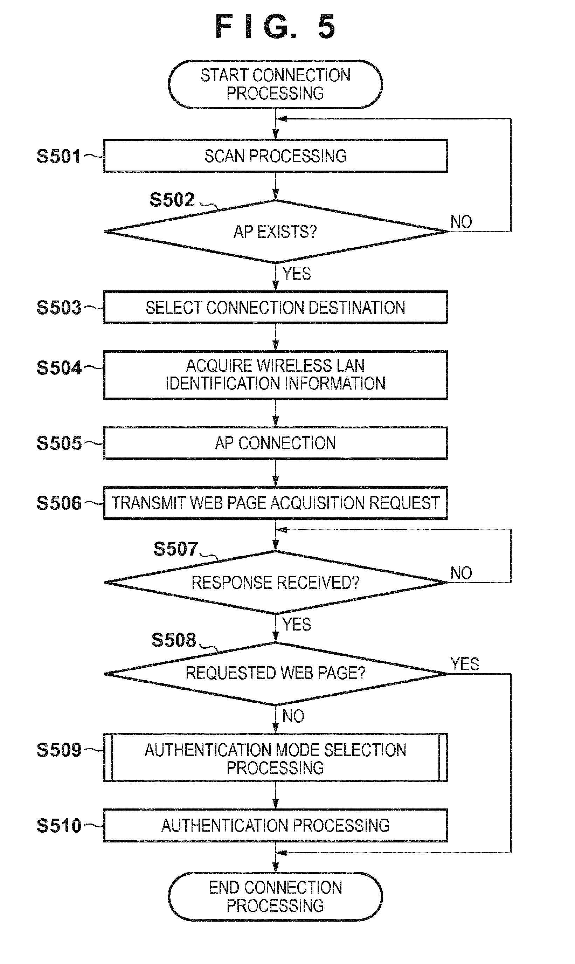

Continuing on, explanation will be given for processing executed when the camera 101 connects to a network in the present embodiment, using Figure 4 and Figure 5. Figure 4 is a sequence diagram for showing a processing example executed upon connection to a network in the system. Figure 5 is a flowchart for showing an example of connection processing, for connection to a network, that the camera 101 executes. In this embodiment, the camera 101 connects to the wireless communication network 103 that the AP 102 constructs by a wireless LAN communication function, and after that, performs authentication processing with the authentication server 104 via the AP 102.

Firstly, the camera 101 initiates wireless LAN connection processing, and executes scan processing with the wireless LAN control unit 206 (step S501). Note, it is assumed that the camera 101 acquires authentication information such as account information prior to scan processing, by operation on the operation unit 212 by a user, by execution of a predetermined tool, or the like. The acquired authentication information may be stored in the storage unit 203.

The camera 101 receives (M401) a beacon that the AP 102 transmits in the scan processing, and discovers the AP (YES in step S502). An SSID, which is identification information for identifying the wireless communication network 103, is included within the beacon. The camera 101 selects a connection target wireless LAN network when the AP is discovered. The selection of the connection target wireless LAN network is executed using the SSID included in the beacon, for example. In a case where a plurality of connection target candidate wireless LAN networks are discovered, a priority level may be set for the connection target candidates, and the connection target wireless LAN network may be selected based on the priority level. Also, the priority level may be set such that wireless LAN networks included in the connection target list 301 are prioritized, and furthermore priority levels may be set between a plurality of wireless LAN networks included in the connection target list 301. Also, configuration may be taken such that connection target candidate networks are presented on the display unit 211, and the user of the camera 101 is allowed to select the connection target network.

After the selection of the connection target network, the camera 101, in the network information acquisition unit 210, acquires identification information for identifying the selected network, and stores the acquired identification information in the storage unit 203 (step S504). Note, in this embodiment, an SSID is used as the identification information of the network, but as long as the wireless LAN network is identifiable, there is no limitation to the SSID. Note, in cases where identification information other than an SSID is used, the SSID item is replaced with the identification information that is used in the connection target list 301.

Next, the camera 101 executes wireless LAN connection processing for connection to the AP selected as the connection destination via the wireless LAN control unit 206 (M402, step S505). After a wireless LAN connection, the camera 101 performs acquisition of an IP (Internet Protocol) address, DNS (Domain Name System) server information, and the like, in the communication unit 204. Acquisition of the IP address and the DNS server information is executed using DHCP (Dynamic Host Configuration Protocol), or the like, for example.

Continuing on, the camera 101, in the authentication processing unit 209, generates an acquisition request message for predetermined information such as a WEB page, and through the communication unit 204 and the wireless LAN control unit 206, transmits the acquisition request message to the AP 102 (step S506). In this embodiment, it is assumed that the camera 101 stores in advance, in the storage unit 203, the URL of a predetermined WEB page for always first trying a connection. The camera 101, for example, after connecting to the wireless LAN network, transmits an HTTP GET request, as an acquisition request message for a WEB page, to the URL (M403).

The AP 102 executes an access determination for the camera 101 when an HTTP GET request is received. The AP 102 holds an access list for indicating whether or not a terminal succeeds at authentication with the authentication server 104, and in the access determination, based on this access list, determines whether the camera 101 succeeded at authentication with the authentication server 104. Note, the HTTP GET request, in cases where it is transmitted from a terminal that succeeded at authentication, is transferred from the AP 102 to the Internet 105, and in cases where it is transmitted from a terminal that did not succeed at authentication, it is transferred from the AP 102 to the authentication server 104. Note, here it is assumed that the camera 101 is unauthenticated. As a result, the HTTP GET request transmitted from the camera 101 is transferred to the authentication server 104 (M404).

When the authentication server 104 receives the HTTP GET request, it transmits, as a response message, an HTTP Response including information of a WEB page for redirection in order to execute the authentication processing (M405). Here, a login URL for executing login processing is included in the WEB page for redirection. The HTTP Response is transmitted to the camera 101 through the AP 102.

When the camera 101 receives the HTTP Response (step S507), in the network information acquisition unit 210, information of the WEB page included in the acquired HTTP Response is analyzed, and it is determined whether or not it is the requested WEB page (step S508). The camera 101, for example, stores in advance predetermined character string information included in the requested WEB page, and determines whether or not the character string information is included within the response message that was received. For example, in cases where the camera 101 accessed http://abcde.net, by determining whether or not the character string, "welcome to abcde" is included as the specific character string, it is determined whether the requested WEB page could be acquired. Note, the camera 101 may determine whether the requested WEB page was acquired using an approach other than this approach. For example, this determination may be executed by confirming information of the transmission source of the acquired WEB page. With such a configuration, it is possible to confirm easily whether the authentication processing is necessary upon connection to the Internet 105.

Next, the camera 101, in cases where the requested WEB page could be acquired, completes the connection processing because access to the Internet 105 is already possible. On the other hand, the camera 101, in cases where the requested WEB page could not be acquired, determines that access to the Internet 105 is restricted, and that authentication processing is necessary. Then, the camera 101 executes later described authentication mode selection processing (step S509), and in the authentication processing unit 209, executes the authentication processing using the selected authentication mode. In the authentication processing, the camera 101, in accordance with the selected authentication mode, transmits or receives a message necessary for authentication with the authentication server 104 (M406, M407). After this, the camera 101 becomes able to connect to the Internet 105 if it succeeds at the authentication (M408).

### (Authentication Mode Selection Processing)

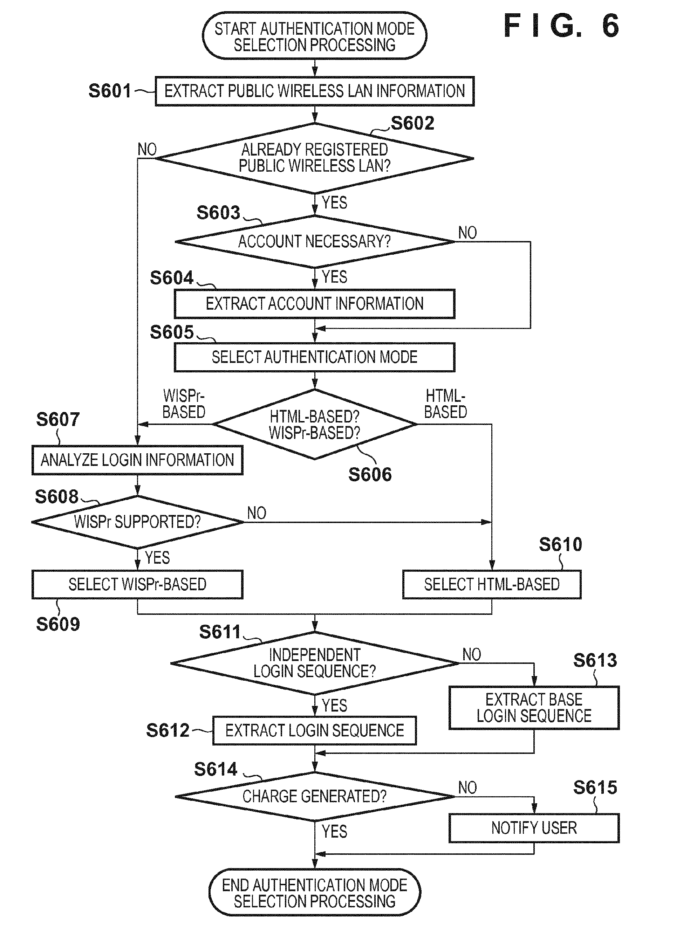

Continuing on, explanation will be given using Figure 6 for the authentication mode selection processing executed in step S509 described above. Figure 6 is a flowchart for showing an example of authentication mode selection processing, that the camera 101 executes. Note, the authentication mode selection processing is executed in the authentication mode selection unit 207 mainly.

Firstly, the authentication mode selection unit 207 extracts public wireless LAN network information (step S601). In this embodiment, as public wireless LAN information, information of an SSID of the wireless communication network 103 to which to connect, and a login URL included in the response message received in response to the WEB page acquisition request is extracted.

Continuing on, the authentication mode selection unit 207, based on information of the SSID, determines whether or not the wireless communication network 103 to connect to is a public wireless LAN network that is already registered in the connection target list 301 (step S602). The authentication mode selection unit 207 advances to the processing on to step S607 in cases where the SSID is not registered in the connection target list 301, and advances the processing on to the step S603 in cases where the SSID is registered in the connection target list 301. Note, the authentication mode selection unit 207, in cases where the SSID is included in the connection target list 301 but the login URL is not included, similarly to in cases in which the SSID is not included in the connection target list 301, may advance the processing to step S607.

In step S603, the authentication mode selection unit 207 determines whether or not an account is necessary for network authentication. In this embodiment, whether or not an account is necessary is determined from realm information included in the connection target list 301. For example, in Figure 3, as in the case in which the SSID is HotspotC, and the login URL is hotspotc.net/free-login, it can be determined that an account is unnecessary for those in which, in the realm information, it is stored that it is unnecessary. In such a case, the authentication mode selection unit 207 advances the processing to step S605. For anything other than those, it is determined that an account is necessary, and the authentication mode selection unit 207 advances the processing to step S604.

In step S604, the authentication information specification unit 208 specifies the account information, and the authentication mode selection unit 207 specifies the realm information from the account information used for authentication, and advances the processing to step S605. Note, the account information used for authentication may be stored in the storage unit 203, or it may be acquired by prompting for user input via the display unit 211 in the public wireless LAN connection processing, and the user operating the operation unit 212. In addition, in cases such as when the user has a plurality of accounts for each public wireless LAN, configuration may be taken such that the user is allowed to select the account to use for the authentication. Also, configuration may be taken such that the account to be used is selected automatically using realm information authenticatable in the connection target public wireless LAN registered in the connection target list 301. In such cases, for example, configuration may be taken such that information as to whether or not a charge is generated is added to the connection target list 301, and that accounts of realm information for which a charge is not generated be selected preferentially. Note, the account used for the authentication may be selected using an approach other than these approaches.

In step S605, the authentication mode selection unit 207, using the public wireless LAN network information extracted in step S601, and, in cases where account information is extracted, using the extracted account information, checks against the connection target list 301, and specifies an attribute for when making the network connection. The authentication mode selection unit 207, for example, based on the user ID of the account information, specifies whether or not the realm information registered in the list in Figure 3 is matched as the attribute. Then, the authentication mode selection unit 207 primarily selects the authentication mode corresponding to the specified attribute as the authentication mode to be used. Also, the authentication mode selection unit 207, simultaneously to selecting the authentication mode, also acquires information of the connection sequence to be used in the authentication mode.

For example, assume that the SSID of the connection target wireless LAN network is HotspotA, and the user ID of the account information to be used is 12345@abcde.com. In this case, @abcde.com, which is the realm information included in the user ID, is compared against the realm information recited in the connection target list 301. In such a case, the realm information included in the user ID is registered as realm information for HotspotA in the connection target list 301. Therefore, the authentication mode selection unit 207 selects, as the authentication mode, the HTML-based authentication mode corresponding to this registered realm information. In addition, the authentication mode selection unit 207 determines to connect using the HTML-Seq#1 connection sequence as the connection sequence.

In addition, the authentication mode selection unit 207, in cases where the SSID of the connection target wireless LAN network is HotspotB, also references the login URL. It depends on the public wireless LAN operator, but there are operators that have a plurality of authentication servers, and in these cases the login URL differs for each authentication server. Because the authentication processing is executed with the authentication server, the authentication mode, the connection sequence, and the like are stored for each authentication server. Here, for example, in cases where the SSID of the connection target wireless LAN network is HotspotB, and the login URL is login3.hotspotb.com, realm information corresponding to the above described account is not registered. Accordingly, in such cases, the authentication mode selection unit 207, in accordance with an attribute for the realm information not being registered, selects the WISPr-based authentication mode as the authentication mode to be used.

On the other hand, in cases where the SSID of the connection target wireless LAN network is HotspotC, in the case where hotspotc.net/free-login is included in the login URL, the authentication mode selection unit 207 can determine that realm information is unnecessary. In such cases, because an account is unnecessary since realm information is not used, the authentication mode selection unit 207, based on the connection target list 301, selects the HTML-based authentication mode as the authentication mode to be used. On the other hand, in cases where the authentication mode selection unit 207 determines that hotspotc.net/WISPr-login is included in the login URL, it selects the WISPr-based authentication mode as the authentication mode to be used. Note, in the example of Figure 3, in the WISPr-based login, @abcde.com and @vwxyz.net are registered as realm information. This realm information indicates that previously authentication succeeded using accounts corresponding to these realms. Because of this, the authentication mode selection unit 207, in authentication processing using an account of the same realm, is able to determine that authentication by the WISPr-based authentication mode will succeed.

Next, the authentication mode selection unit 207 determines which of the WISPr-based login or the HTML-based login was selected (step S606). Then, the authentication mode selection unit 207 advances the processing to step S607 in cases where the WISPr-based login is selected, and advances the processing to step S610 in cases where the HTML-based login is selected.

In step S607, the authentication mode selection unit 207 analyzes login information from the received HTTP Response. This is performed to distinguish whether information corresponding to WISPr in the HTTP Response is included, and determine whether or not WISPr is actually supported. After this, the authentication mode selection unit 207 determines whether or not WISPr is supported based on a result of the analysis (step S608), and in cases where WISPr is supported, advances the processing to step S609, and in cases where it is not supported advances the processing to step S610. The authentication mode selection unit 207, in step S609, finally selects the WISPr-based authentication mode as the authentication mode to be used. On the other hand, the authentication mode selection unit 207, in step S610, finally selects the HTML-based authentication mode as the authentication mode to be used.

After this, in the authentication processing with the connection destination authentication server, it is determined whether or not there is an independent login sequence corresponding to the selected authentication mode (step S611). Whether or not there is an independent sequence is determined based on the login sequence item included in the connection target list 301. Because it is possible that there are public wireless LAN operators that have independently extended the WISPr protocol even if it is WISPr-based, similarly determination processing is executed.

Note, in cases of connecting to a public wireless LAN which is not registered in the connection target list 301, whether or not there is an independent connection sequence may be determined without referencing the connection target list 301. In these cases, for example, whether or not there is an independent connection sequence is determined depending on whether or not a character string for specifying a corresponding connection sequence script is included within the received HTTP Response. However, another approach may be used as the connection sequence specifying approach.

In cases where it is determined that there is an independent login sequence in step S611, the processing proceeds to step S612, and in cases where it is determined that there is no independent login sequence, the processing proceeds to step S613. Then, in step S612 a corresponding login sequence script is extracted, and in step S613, login sequence scripts that are a base of each authentication mode are extracted.

Continuing on, the authentication mode selection unit 207 determines whether or not a charge is generated (step S614). Then, the authentication mode selection unit 207, in a case where it determines that a charge is generated, advances the processing on to step S615, and in a case where it determines that a charge is not generated, completes the authentication mode selection processing. Cases where a charge is generated, for example, can be considered to be cases where the account used for the authentication processing is used for roaming in the public wireless LAN. In cases in which roaming is executed, there are many cases in which, though it is possible to connect by a collaboration between public wireless LAN operators, a separate additional charge is incurred. In addition, in cases of connecting to a public wireless LAN that provides both a free and a charged service, there are cases where a charge is generated. In contrast to charged services, cases such as those in which in the free service, a restriction is put on the usage of the service can be considered. For example, there are cases such as those in which, in the case where the free service is used, the communication speed is restricted, or only a portion of the Internet is made to be accessible. In these kinds of cases, for example, normally when the user using the free service selects to use the charged service in order to cancel these kinds of restrictions temporarily, a charge is generated.

In this embodiment, for example, information as to whether or not a charge is generated due to roaming, or the like, is added and held for each realm information item in the connection target list 301, and the authentication mode selection unit 207 determines whether or not a charge is generated by referencing the connection target list 301. Note, the authentication mode selection unit 207 may analyze the received HTTP Response, and in cases where specific character string information is included, and determine that a charge is generated. Also, whether or not a charge is generated may be determined by another approach.

In cases where it is determined that a charge is generated, in step S615, the display unit 211 notifies the user by presenting something to the effect that a charge is generated. Along with notifying the user, configuration may be taken such that the user is allowed to select whether or not to accept the charge, and execute the authentication processing. In cases where an instruction indicating that the user accepts the charge is input via the operation unit 212, the authentication processing is executed, and the connection processing is continued, and in cases where an instruction to not accept is input, the connection processing is stopped, and the connection to the wireless communication network 103 is disconnected.

Note, in the above described explanation, the user is notified in cases where a charge is generated, but configuration may be taken such that the authentication mode is automatically selected in accordance with whether or not the charge is generated. For example, it is assumed that HotspotC, which is registered in the connection target list 301, simultaneously provides free and charged services. In such a case, the login URL of the free service (hotspotc.net/free-login) and the login URL of the charged service (hotspotc.net/WISPr-login) are both included in the WEB page for redirection. Also, in such a case, because from the realm information corresponding to each login URL, for the login URL of the free service the realm information is unnecessary, it can be determined that a charge is not generated. As a result, for example, configuration may be taken such that the authentication mode selection unit 207 selects preferentially the side for which a charge is not generated, and selects, as authentication processing to be used, the HTML-based authentication mode corresponding to the login URL of the free service.

Also, configuration may be taken such that the authentication mode selection unit 207 selects automatically the authentication mode to be used from the perspective of connection surety rather than the existence or absence of a charge. For example, explanation will be given for cases in which, in the above described HotspotC, the camera 101 supports both authentication modes, and 12345@abcde.com is held as the account. In such a case, the authentication mode selection unit 207, in the authentication mode selection processing of step S605, determines whether or not an account corresponding to the realm @abcde.com is held. Then, configuration may be taken such that in cases where this kind of account is held, the authentication mode selection unit 207 prioritizes WISPr-based considering connectability because it can be determined that authentication succeeded with an account by that realm already. In other words, there is the possibility that when the HTML-based login corresponds to a login sequence for each authentication server, but for reasons on the operator side, the WEB page, or the like, is updated, the login sequence will also be changed. In contrast to this, for WISPr-based login, because it is a standard protocol, the possibility is small that the connection sequence will be changed much, and so the connectability of a WISPr-based login is more guaranteed than an HTML-based login. As a result, there are many cases in which the connection surety is superior with a WISPr-based login. For the same reason, configuration may be taken such that even in cases where an account corresponding to a realm registered in the connection target list 301 is not held, the WISPr-based authentication mode is selected preferentially using an account of a separate realm.

Note, configuration may be taken such that the camera 101, in a case where it determines that the authentication processing failed, in the authentication mode selection unit 207, executes once again the above described authentication mode selection processing, and selects a yet to be executed authentication mode in the authentication mode selection of step S605. Note, in such a case, connection sequences that are the base for each authentication mode are used as the connection sequence. In addition, based on information of a login URL of the connection target list 301, a connection sequence having high relevance may be selected. With this, with the premise that a single network is connected to, trying authentication processing in sequence in accordance with an order of authentication modes to be used becomes possible.

For example, explanation will be given for a case in which, in a case where, in HotspotB in the connection target list 301, login1.hotspotb.com is designated for the login URL, WISPr-based authentication using the account 001@jklmn failed. In such a case, because WISPr-based authentication failed, HTML-based authentication mode is then executed using the same account. Here, HTML-Seq#2 is selected for the login sequence from the information of the connection target list 301. In cases where authentication using that authentication mode succeeds, the camera 101 updates the connection target list 301 by newly adding @jklmn as realm information for the column where the login URL of HotspotB is login1.hotspotb.com. Similarly, in cases where the authentication with a public wireless LAN having an SSID that is unregistered in the connection target list 301 succeeds, the information relating to that SSID is newly registered in the connection target list 301, and the connection target list 301 is updated in realm information (attribute) units.

Configuration may be taken such that the camera 101, in cases where the authentication processing fails, scans the periphery once again, and searches to determine whether or not there is a public wireless LAN for which the account used for the authenticating is usable other than the public wireless LAN for which the authentication processing failed. Whether or not there is a public wireless LAN for which the account is usable is determined based on the result of a scan and the realm information of the connection target list 301, for example. Then, the camera 101, in a case where it determines that the public wireless LAN for which that realm is usable is in the periphery, preferentially executes connection processing.

In addition, configuration may be taken such that the camera 101 stores information for when the authentication failed in the connection target list 301. With this, it is possible to determine that the authentication will fail in advance at the point in time when the authentication mode is selected, which eliminates the necessity of executing the authentication processing unnecessarily.

In this embodiment, realm information is used as the attribute information of the authentication information in the connection target list 301, but there is no limitation to realm information, and configuration may be taken such that the user ID itself registered and managed. It is possible to adopt the present embodiment by managing on a user ID basis for cases such as where even if it is the same realm, there is a differing authentication result when the user ID is different. In addition, configuration may be taken such that, as the attribute information of the authentication information of the connection target list 301, a plurality of realm information items are grouped on a distribution source ISP basis, and management is performed in units of ISP.

While in the present embodiment, in the connection target list 301, the apparatus that executes the authentication (the authentication server) is identified based on the login URL, information other than the login URL may be used if it is information that can identify the authentication server. For example, a specific character-string in the HTML information included in the HTTP Response, or the like, or positional information acquired separately, may be specified as the information used for identifying the authentication server.

In the present embodiment, explanation was given for cases where there are two authentication modes (WISPr-based and HTML-based) as the authentication modes, but there is no limitation to these. For example, other authentication modes may be used, and three or more authentication modes may be supported. In such cases, by a similar approach to the present embodiment, based on network information of the public wireless LAN, and attribute information obtained from the authentication information such as account information, it is possible to automatically select the authentication mode.

As described above, by virtue of the present embodiment, it becomes possible for the camera 101 to specify an attribute for when connecting to a network based on network information and account information, and in accordance with that attribute, to select automatically the authentication mode that should be executed preferentially.

By virtue of the present invention it is possible to execute authentication by selecting an appropriate mode automatically upon connection to a network.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. A communication apparatus (101) adapted to select one out of a plurality of authentication modes for connecting to a network for which an authentication is required, the apparatus comprising:
identification means (208, 210) for identifying network information relating to a connection target network, and authentication information for executing an authentication;
selection means (207) for selecting an authentication mode to be used from the plurality of authentication modes based on the network information and one or more attributes for when connecting to the connection target network based on the authentication information; and
executing means (209) for executing an authentication for connecting to the connection target network using the selected authentication mode.

2. The communication apparatus according to claim 1, wherein
said execution means (209) is operable to execute an authentication for connecting to the connection target network using an authentication mode different to the selected authentication mode in a case where the authentication using the selected authentication mode fails.

3. The communication apparatus according to claim 1 or 2, further comprising
determination means (209) for requesting known information from the connection target network, and determining whether the connection target network requires an authentication based on whether the known information can be acquired.

4. The communication apparatus according to any one of claims 1 - 3, wherein
the one or more attributes include information of a distribution source of the authentication information.

5. The communication apparatus according to claim 4, wherein
said selecting means (207), for a single item of the network information, is operable to select a different authentication mode for a case where the information of the distribution source indicates a known distribution source than for a case where the information of the distribution source does not indicate a known distribution source.

6. The communication apparatus according to any one of claims 1 - 5, wherein
the one or more attributes include whether or not a charge is generated for the connection to the connection target network.

7. The communication apparatus according to claim 6, wherein
said selecting means (207), for a single item of the network information, is operable to select a different authentication mode for a case where a charge is generated for the connection to the connection target network than for a case where a charge is not generated for the connection to the connection target network.

8. The communication apparatus according to claim 6 or 7, further comprising:
presentation means (211) for presenting to a user of the communication apparatus that a charge is generated in a case where a charge is generated for the connection to the connection target network; and
acquisition means (212) for acquiring an instruction from the user, wherein
said execution means (209) is operable to execute an authentication for connecting to the connection target network in a case where the instruction indicates that the charge is accepted.

9. The communication apparatus according to any one of claims 1 - 8, wherein
the network information includes identification information for identifying the connection target network.

10. The communication apparatus according to any one of claims 1 - 9, wherein
the network information includes information relating to an apparatus that executes an authentication relating to the connection target network.

11. The communication apparatus according to claim 10, wherein
one of the one or more attributes corresponding to an apparatus for executing one authentication and another one of the one or more attributes corresponding to an apparatus for executing another authentication are different to each other.

12. A method of controlling a communication apparatus (101) adapted to selects one out of a plurality of authentication modes for connecting to a network for which an authentication is required, the method comprising:
identifying (S501, S601, S604) network information relating to a connection target network, and authentication information for executing an authentication;
selecting (S509, S605) an authentication mode to be used from the plurality of authentication modes based on the network information and one or more attributes for when connecting to the connection target network based on the authentication information; and
executing (S510) an authentication for connecting to the connection target network using the selected authentication mode.

13. A computer program comprising instructions which, when executed on a computer cause that computer, to execute the method of Claim 12.

14. A storage medium having stored thereon the computer program of Claim 13.
